# EUROPEAN PATENT APPLICATION

(11) **EP 4 648 127 A1**
(43) Date of publication of application: **12.11.2025**
(21) Application number: 24860435.7
(22) Date of filing: 30.08.2024
(51) Int. Cl.: H01M 4/36, H01M 4/48, C08G 18/48, C08G 18/75, H01M 4/131, H01M 10/052, H01M 4/02

(54) **COMPOSITION FOR COATING NEGATIVE ELECTRODE ACTIVE MATERIAL, NEGATIVE ELECTRODE ACTIVE MATERIAL, NEGATIVE ELECTRODE COMPOSITION, NEGATIVE ELECTRODE, AND LITHIUM SECONDARY BATTERY COMPRISING SAME**

(30) Priority: 01.09.2023 KR 20230116103; 29.08.2024 KR 20240116316
(71) Applicant: LG Energy Solution, Ltd., Seoul 07335 (KR)
(72) Inventor: KIM, Taeho, Daejeon 34122 (KR); PARK, Heeyeon, Daejeon 34122 (KR); LEE, Seunggwan, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/012972
(87) International publication number: WO 2025/048516

(57) **Abstract**

The present invention relates to a composition for coating a negative electrode active material, and a negative electrode, a lithium secondary battery, a battery module, and a battery pack including same, the composition comprising a polymer having the binding group -HN-C=O-, wherein the glass transition temperature (Tg) of the polymer having the binding group -HN-C=O- is -30°C to 80°C.

## Description

### [Technical Field]

The present specification claims priority to and the benefit of Korean Patent Application Nos. 10-2023-0116103 and 10-2024-0116316 filed in the Korean Intellectual Property Office on September 1, 2023 and August 29, 2024, respectively, the entire contents of which are incorporated herein by reference.

The present invention relates to a composition for coating a negative electrode active material, a negative electrode active material, a negative electrode composition, a negative electrode, and a secondary battery including the same.

### [Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including each of a positive electrode active material and a negative electrode active material may be formed on a current collector. In general, lithium-containing metal oxides such as LiCoO₂ and LiMn₂O₄ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon-based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by SiOₓ (0<x<2) has an advantage in that the degree of volume expansion/contraction due to charging/discharging is low compared to other silicon-based active materials such as silicon (Si). However, the silicon-based oxide still has a disadvantage in that the initial efficiency is lowered depending on the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.

### [Detailed Description of the Invention]

### [Technical Problem]

The present invention relates to a composition for coating a negative electrode active material capable of improving the performance of a lithium secondary battery, a negative electrode active material, a negative electrode composition, a negative electrode, and a secondary battery including the same.

### [Technical Solution]

An exemplary embodiment of the present invention provides a composition for coating a negative electrode active material, including a polymer having a bonding group of -HN-C=O-, wherein the polymer having a bonding group of -HN-C=O- has a glass transition temperature (Tg) of -30°C to 80°C.

According to an exemplary embodiment of the present invention, the polymer having a bonding group of -HN-C=O-is a polymer of an alcohol and isocyanate, and the molar ratio of the -NCO group of the isocyanate to the -OH group of the alcohol is 0.5 to 4.

An exemplary embodiment of the present invention provides a negative electrode active material including: silicon-based particles; and a coating layer provided on at least a part of a surface of the silicon-based particles and including the composition for coating a negative electrode active material according to the exemplary embodiment.

An exemplary embodiment of the present invention provides a negative electrode composition including the negative electrode active material according to the exemplary embodiment, a binder, and a conductive material. An exemplary embodiment of the present invention provides a negative electrode including a negative electrode current collector and the negative electrode composition according to the exemplary embodiment on at least one surface of the negative electrode current collector.

An exemplary embodiment of the present invention provides a lithium secondary battery including the negative electrode according to the exemplary embodiment, a separator, and a positive electrode.

An exemplary embodiment of the present invention provides a battery module including the lithium secondary battery according to the exemplary embodiment.

An exemplary embodiment of the present invention provides a battery pack including the lithium secondary battery according to the exemplary embodiment.

An exemplary embodiment of the present invention provides a battery pack including the battery module according to the exemplary embodiment.

### [Advantageous Effects]

According to an exemplary embodiment of the present invention, there is an effect of ameliorating serious volume change and particle breakage during charging and discharging of a silicon-based active material by forming a coating layer on at least a part of the surface of the silicon-based active material using a composition for coating a negative electrode active material, including a polymer having a bonding group of -HN-C=O-. Specifically, electrodes including a silicon-based active material have inferior characteristics compared to graphite-based active materials due to volume changes and particle breakage during charging and discharging, but the inferior characteristics can be ameliorated by coating the silicon-based active material with a polymer having a bonding group of -HN-C=O-, which has impact resistance and excellent shape restoring properties in which the polymer tries to return to its original shape even when deformed by applying force.

Therefore, a negative electrode active material including the composition for coating a negative electrode active material according to exemplary embodiments of the present invention, a negative electrode including the negative electrode active material, and a secondary battery including the negative electrode have an effect of improving the discharge capacity, initial efficiency, resistance performance, or service life characteristics of the battery.

### [Best Mode]

Hereinafter, the present invention will be described in more detail in order to help the understanding of the present invention. The present invention can be implemented in various different forms, and is not limited to the exemplary embodiments described herein. In this case, terms or words used in the specification and the claims should not be interpreted as being limited to typical or dictionary meanings, and should be interpreted with a meaning and a concept that are consistent with the technical spirit of the present invention based on the principle that an inventor can appropriately define a concept of a term in order to describe his/her own invention in the best way.

In the present invention, the term "comprise", "include", or "have" is intended to indicate the presence of the characteristic, number, step, constituent element, or any combination thereof implemented, and should be understood to mean that the possibility of the presence or addition of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

Hereinafter, preferred exemplary embodiments of the present invention will be described in detail. However, the exemplary embodiments of the present invention may be modified into various other forms, and the scope of the present invention is not limited to the exemplary embodiments which will be described below.

### <Composition for coating negative electrode active material>

The composition for coating a negative electrode active material according to an exemplary embodiment of the present invention includes a polymer having a bonding group of -HN-C=O-, and the polymer having a bonding group of -HN-C=O- has a glass transition temperature (Tg) of -30°C to 80°C.

Electrodes including a silicon-based active material used in the related art have inferior properties due to serious volume changes and particle breakage during charging and discharging compared to graphite-based active materials.

However, according to the exemplary embodiments, the polymer having a bonding group of -HN-C=O- has impact resistance and shape restoring properties in which the polymer returns to its original shape even when deformed by applying force, so that the inferior characteristics may be ameliorated by including the polymer having a bonding group of -HN-C=O- as a coating layer of the negative electrode active material. This may minimize the breakage of the negative electrode active material and maintain the connectivity of the conductive material, thereby implementing long service life battery characteristics.

The glass transition temperature of a polymer means the temperature at which the Brownian motion of the polymer chains becomes active. Since the glass transition temperature means that a non-crystalline polymer receives and absorbs a certain temperature energy and transfers it to the chain motion of the polymer, the glass transition temperature may be considered as indicating the shock absorption strength and restoring properties of the molecule.

The glass transition temperature of the composition for coating a negative electrode active material was measured by differential scanning calorimetry (DSC). After the composition for coating a negative electrode active material is placed in a differential scanning calorimeter pan, the composition is heated from -100°C to 200°C at a rate of 5°C/min to determine a temperature interval where the heat flow changes, which is called the glass transition temperature.

For example, the polymer having a bonding group of - HN-C=O- has a glass transition temperature of -30°C to 80°C. Specifically, the glass transition temperature may be -30°C to 70°C, -30°C to 60°C, -30°C to 50°C, -20°C to 40°C, -20°C to 30°C, and -20°C to 20°C. When the glass transition temperature is less than -30°C, there is a problem in that the polymer having a bonding group of -HN-C=O- may be dissolved in a slurry without being coated on the surface of the active material, and when the glass transition temperature exceeds 80°C, there is a problem in that the restoring properties of the coating layer during charging and discharging may decrease due to its high rigidity.

According to an exemplary embodiment, the polymer having a bonding group of -HN-C=O- is a polymer of an alcohol and isocyanate, and the molar ratio of the -NCO group of the isocyanate to the -OH group of the alcohol is 0.5 to 4.

When the molar ratio of the -NCO group of the isocyanate to the -OH group of the alcohol is 0.5 or more, it is possible to minimize the problem in that the polymer having a bonding group of -HN-C=O- may be dissolved in a slurry without being coated on the surface of the active material, and when the molar ratio of the -NCO group of the isocyanate to the -OH group of the alcohol is 4 or less, the degree of hardness of the coating layer is controlled, so that it is possible to appropriately provide the shape restoring property effect against the volume change of the active material during charging and discharging. Therefore, by performing a reaction such that the molar ratio of the - NCO group of the isocyanate to the -OH group of the alcohol is 0.5 to 4, the volume change and particle breakage of the negative electrode active material during charging and discharging may be suppressed, so that it is possible to effectively improve the service life characteristics of the battery.

For example, the molar ratio of the -NCO group of the isocyanate to the -OH group of the alcohol may be 0.5 to 4, 0.5 to 3.5, 0.5 to 3, 1 to 3, and 1.2 to 2.6. According to an exemplary embodiment, the polymer having a bonding group of -HN-C=O- includes a urethane-based polymer.

According to an exemplary embodiment, the polymer having a bonding group of -HN-C=O- has a weight average molecular weight of 5,000 g/mol to 1,000,000 g/mol.

The weight average molecular weight is a value measured by gel permeation chromatography (GPC) and converted from a standard polystyrene calibration curve.

According to an exemplary embodiment, the composition for coating a negative electrode active material may further include a solvent or a catalyst component.

According to an exemplary embodiment, the solvent may be N-methylpyrrolidone (NMP), dimethylformamide (DMF), toluene, or dimethyl sulfoxide (DMSO).

According to an exemplary embodiment, the catalyst may be an organic metal catalyst.

According to an exemplary embodiment, the catalyst may be dibutyltin dilaurate (DBTDL).

### <Negative electrode active material>

According to an exemplary embodiment of the present invention, a negative electrode active material includes: silicon-based particles; and a coating layer provided on at least a part of a surface of the silicon-based particles and including the composition for coating a negative electrode active material.

In an exemplary embodiment of the present specification, the negative electrode active material is a negative electrode active material in which the amount of the coating layer is 0.1 wt% or more and 5 wt% or less based on 100 wt% of the entire negative electrode active material. For example, the amount of the coating layer may be 0.1 wt% or more and 4 wt% or less, 0.1 wt% or more and 3 wt% or less, 0.2 wt% or more and 3 wt% or less, and 0.3 wt% or more and 3 wt% or less, based on 100 wt% of the entire negative electrode active material. When the amount of the coating layer exceeds 5 wt%, the capacity decreases as the weight of the coating layer is increased compared to the total weight of the active material, and it is disadvantageous for charging and discharging lithium due to the polyurethane characteristics having low lithium ion conductivity. When the amount of the coating layer is less than 0.1 wt%, the restoring properties due to the volume change of the active material are so small that there is a risk of delamination of the coating layer during slurry mixing.

In an exemplary embodiment of the present specification, the coating layer has a thickness of 1 nm to 1 µm.

The thickness of the surface coating layer may be measured through X-ray photoelectron spectroscopy (XPS) depth-profile.

The thickness of the surface coating layer may be determined based on whether nitrogen (N) to be detected while etching the surface of the negative electrode active material including the coating layer disappears or not.

For example, the coating layer has a thickness of 1 nm to 1 µm. Specifically, the coating layer may have a thickness of 1 nm to 800 nm, 5 nm to 500 nm, 5 nm to 300 nm, 5 nm to 100 nm, and 5 nm to 50 nm. When the thickness of the coating layer exceeds 1 µm, it is disadvantageous in that a low capacity is exhibited because the surface resistance is too large to charge and discharge lithium, and when the thickness of the coating layer is less than 1 nm, it is disadvantageous in that the restoring properties due to the volume change of the negative electrode active material during charging and discharging is negligible and in that there is a risk of delamination of the coating layer during slurry mixing.

According to an exemplary embodiment of the present invention, the silicon-based particles are silicon carbon composite or silicon oxide particles.

According to an exemplary embodiment, the silicon-based particles may include a silicon carbon composite, a silicon oxide, or both.

According to an exemplary embodiment, the silicon carbon composite may be a Si/C-based active material.

In the present specification, the silicon carbon composite is a composite of Si and C, and is distinguished from silicon carbide which is denoted as SiC. Since the silicon carbide does not electrochemically react with lithium, all performance parameters such as service life may be measured at zero.

The silicon carbon composite may include at least one of a silicon carbon composite formed by depositing silicon on a porous carbon structure; and a silicon carbon composite in which carbon is composited on a porous silicon structure. The silicon carbon composite may be a composite in which silicon, graphite and the like are composited. In the silicon carbon composite, the silicon may be nano-silicon.

According to an exemplary embodiment, the silicon carbon composite includes porous carbon-based particles and a silicon coating layer located on the surface or in the internal pores of the porous carbon-based particles.

According to an exemplary embodiment, the silicon carbon composite may have a specific surface area of 0.5 m²/g to 10 m²/g by the BET method, a pore volume of 0.005 cm³/g to 0.03 cm³/g, and a pore size of 10 nm to 20 nm by the BET method. The silicon carbon composite may have a pore volume of 0.005 cm³/g to 0.03 cm³/g as measured by a mercury penetration method.

According to an exemplary embodiment, the silicon carbon composite may have a D90 particle diameter of 11 µm to 20 um, a D50 particle diameter of 3 µm to 10 µm, and a D10 particle diameter of 0.1 µm to 3 µm.

According to an exemplary embodiment, the silicon carbon composite may be prepared by a method including: etching carbon-based particles including internal pores to expand the internal pores of the carbon-based particles; and forming a silicon coating layer on the surface or in the internal pores of the carbon-based particles including expanded internal pores.

The expanding of the internal pores of the carbon-based particles may be performed in a nitrogen (N₂) atmosphere, an oxygen (O₂) atmosphere, or an air atmosphere. Specifically, the flow rate of the oxygen (O₂) or the air including oxygen may be controlled at 0.1 to 10 L/min.

The expanding of the internal pores of the carbon-based particles may be performed at a temperature range of 400°C to 1200°C for 30 minutes to 4 hours.

Depending on the conditions for expanding the internal pores of the carbon-based particles, the pore characteristics of the resulting porous carbon-based particles may vary.

The forming of the silicon coating layer may be performed using a chemical vapor deposition method. In this case, silicon nanoparticles may be deposited on the surface and/or in internal pores of the carbon-based particles with expanded internal pores, thereby forming a silicon coating layer in the form of a film, an island, or a mixture thereof.

The silicon nanoparticles may be crystalline, quasicrystalline, amorphous, or a combination thereof.

According to an exemplary embodiment, the silicon oxide may include SiOₓ (0≤x<2).

The active material containing SiOₓ (0≤x<2) may be a silicon oxide particle including SiOₓ (0<x<2) and pores.

The SiOₓ (0<x<2) corresponds to a matrix in the silicon oxide particle. The SiOₓ (0<x<2) may be in a form including Si and SiO₂, and the Si may also form a phase. That is, the x corresponds to the number ratio of O to Si included in the SiOₓ (0<x<2). When the silicon oxide particles include the SiOₓ (0<x<2), the discharge capacity of a secondary battery may be improved.

The silicon oxide particles may further include at least one of a Mg compound and a Li compound. The Mg compound and Li compound may correspond to a matrix in the silicon oxide particle.

The Mg compound and/or Li compound may be present inside and/or on the surface of the SiOₓ (0<x<2). The initial efficiency of the battery may be improved by the Mg compound and/or Li compound.

The Mg compound may include at least any one selected from the group consisting of Mg silicates, Mg silicides and Mg oxides. The Mg silicate may include at least any one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt%, or 0.1 wt% to 10 wt% based on total 100 wt% of the silicon oxide particles. Specifically, the Mg element may be included in an amount of 0.5 wt% to 8 wt% or 0.8 wt% to 4 wt%. When the above range is satisfied, the Mg compound may be included in an appropriate content in the silicon oxide particles, so that the volume change of the silicon oxide particles during the charging and discharging of a battery may be readily suppressed, and the discharge capacity and initial efficiency of the battery may be improved.

The Li compound may include at least any one selected from the group consisting of Li silicates, Li silicides and Li oxides. The Li silicate may include at least any one of Li₂SiO₃, Li₄SiO₄ and Li₂Si₂O₅. The Li silicide may include Li₇Si₂. The Li oxide may include Li₂O.

In an exemplary embodiment of the present invention, the Li compound may be present in the form of a lithium silicate. The lithium silicate is represented by LiₐSi_{b}O_{c} (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of Li₂SiO₃, Li₄SiO₄, and Li₂Si₂O₅ in the silicon oxide particles, and the amorphous lithium silicate may be in the form of LiₐSi_{b}O_{c} (2≤a≤4, 0<b≤2, 2≤c≤5), and are not limited to the forms.

In an exemplary embodiment of the present specification, the Li element may be included in an amount of 0.1 wt% to 20 wt%, or 0.1 wt% to 10 wt% based on total 100 wt% of the silicon oxide particles. Specifically, the Li element may be included in an amount of 0.5 wt% to 8 wt%, more specifically 0.5 wt% to 4 wt%. When the above range is satisfied, the Li compound may be included in an appropriate content in the silicon oxide particles, so that the volume change of the negative electrode active material during the charging and discharging of a battery may be readily suppressed, and the discharge capacity and initial efficiency of the battery may be improved.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the Mg element or the Li element of the prepared silicon oxide particles may be analyzed by converting the total sum so as to be the theoretical value.

In an exemplary embodiment of the present specification, a carbon layer may be provided on the surface and/or inside pores of the silicon oxide particles. By the carbon layer, conductivity is imparted to the silicon oxide particles, and the initial efficiency, service life characteristics, and battery capacity characteristics of a secondary battery including the negative electrode active material including the silicon oxide particles may be improved. The total weight of the carbon layer may be 5 wt% to 40 wt% based on total 100 wt% of the silicon oxide particles.

In an exemplary embodiment of the present specification, the carbon layer may include at least any one of amorphous carbon and crystalline carbon.

The negative electrode active material may have an average particle diameter (D50) of 0.1 µm to 30 µm, specifically 1 µm to 20 µm, and more specifically 1 µm to 10 µm. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

In the present specification, the average particle diameter (D50) may be defined as a particle diameter corresponding to 50% of the volume cumulative amount in a particle diameter distribution curve of the particles. The average particle diameter (D50) may be measured using, for example, a laser diffraction method. The laser diffraction method can generally measure a particle diameter of from submicron region to about several mm, and results with high reproducibility and high resolution may be obtained. The silicon-based active material may have a specific surface area of 2 m²/g to 10 m²/g. In the present specification, the specific surface area is measured by the BET method.

### <Preparation method of negative electrode active material>

According to an exemplary embodiment of the present invention, the method for preparing a negative electrode active material includes: preparing silicon-based particles; and forming a coating layer on the silicon-based particles.

### [Preparing of silicon-based particles]

In an exemplary embodiment of the present invention, the silicon-based particles may be silicon carbon composite or silicon oxide particles.

In an exemplary embodiment of the present invention, the silicon-based particles may be silicon oxide particles formed by heat-treating a powder in which a Si powder and a SiO₂ powder are mixed.

For example, the silicon oxide particles may be prepared by vaporizing the mixed powder of the Si powder and the SiO₂ powder through heat treatment at 1000°C to 1800°C or 1200°C to 1500°C.

The silicon oxide particles may further include one or more of a Mg element and a Li element, and the Mg element or the Li element may be distributed on the surface of and/or inside the silicon-based oxide particles in a state of being doped in the silicon-based oxide particles.

The silicon oxide particles may further include a carbon layer.

In an exemplary embodiment of the present invention, the silicon-based particles may be a silicon carbon composite prepared by flowing SiH₄/He gas through a porous carbon structure formed by heat-treating a cellulose powder.

The silicon carbon composite may further include a carbon layer.

### [Forming of coating layer on silicon-based particles]

In an exemplary embodiment of the present invention, the composition for coating a negative electrode active material coated on the silicon-based particles may include a polymer having a bonding group of -HN-C=O-.

The above-described description of the polymer having a bonding group of -HN-C=O- may be applied to the polymer having a bonding group of -HN-C=O-.

According to an exemplary embodiment of the present invention, a negative electrode active material having a coating layer formed thereon may be prepared by stirring the silicon-based particles and a composition for coating a negative electrode active material, including the polymer having a bonding group of -HN-C=O-.

For example, a negative electrode active material having a coating layer formed thereon may be prepared by stirring the prepared silicon-based particles and a composition for coating a negative electrode active material, including the polymer having a bonding group of - HN-C=O- at a rate of 200 rpm to 5000 rpm.

According to an exemplary embodiment of the present invention, the method may further include a drying step of removing all the solvents by placing the negative electrode active material having the coating layer formed thereon in a vacuum state at 20°C to 100°C.

### <Negative electrode composition>

According to an exemplary embodiment of the present invention, a negative electrode composition may include the above-described negative electrode active material particles.

According to an exemplary embodiment of the present invention, the negative electrode composition may further include a binder.

According to an exemplary embodiment of the present invention, the negative electrode composition may further include a conductive material.

According to an exemplary embodiment of the present invention, the negative electrode composition may further include a binder and a conductive material.

According to an exemplary embodiment of the present invention, the negative electrode composition may include a negative electrode active material, a binder, and a conductive material.

According to an exemplary embodiment of the present invention, the binder may include carboxymethyl cellulose.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene-butadiene rubber (SBR), fluorine rubber, polyacrylic acid and a material in which the hydrogen thereof is substituted with Li, Na, Ca, or the like, and may also include various copolymers thereof.

According to an exemplary embodiment of the present invention, the conductive material may include one or more of carbon black and single-walled carbon nanotubes.

The aforementioned conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; fluorocarbon powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

According to an exemplary embodiment of the present invention, the conductive material may be carbon black, a conductive fiber, a carbon nanotube, or a metal powder. Specifically, in an exemplary embodiment of the present invention, the conductive material may be graphite such as natural graphite or artificial graphite; or carbon black such as acetylene black, Ketjen black, channel black, furnace black, lamp black, or thermal black. In an exemplary embodiment of the present invention, the conductive material may be a conductive fiber such as carbon fiber or metal fiber. In an exemplary embodiment of the present invention, the conductive material may be a conductive tube such as a carbon nanotube. The conductive material may be fluorocarbon powder; a metal powder such as an aluminum powder, and a nickel powder.

According to an exemplary embodiment of the present invention, the conductive material may be present in an amount of 0.01 parts by weight or more and 20 parts by weight or less based on 100 parts by weight of the negative electrode active material layer composition. Specifically, in an exemplary embodiment of the present invention, the conductive material may be present in an amount of 0.01 parts by weight or more and 10 parts by weight or less based on 100 parts by weight of the negative electrode active material layer composition. In an exemplary embodiment of the present invention, the conductive material may be present in an amount of 0.01 parts by weight or more and 7 parts by weight or less based on 100 parts by weight of the negative electrode active material layer composition. The conductive material may be present in an amount of 0.1 parts by weight or more and 3 parts by weight or less based on 100 parts by weight of the negative electrode active material layer composition.

### <Negative electrode>

An exemplary embodiment of the present invention provides a negative electrode including the negative electrode composition according to the above-described exemplary embodiments.

Specifically, the negative electrode may include a negative electrode current collector and a negative electrode active material layer provided on at least one surface of the negative electrode current collector.

The negative electrode active material layer includes the negative electrode composition according to the above-described exemplary embodiment.

The negative electrode active material layer may be formed by applying a negative electrode slurry including the above-described negative electrode composition to at least one surface of a negative electrode current collector and drying and rolling the negative electrode current collector.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 µm to 20 µm, the thickness of the current collector is not limited thereto.

### <Lithium secondary battery>

An exemplary embodiment of the present invention provides a lithium secondary battery including the negative electrode according to the above-described exemplary embodiment, a separator, and a positive electrode.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active materials and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

The lithium secondary battery may further include an electrolyte. Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to another exemplary embodiment of the present invention, provided are a battery module including the lithium secondary battery as a unit cell, and a battery pack including the same.

According to still another exemplary embodiment of the present invention, provided is a battery pack including the lithium secondary battery.

According to yet another exemplary embodiment of the present invention, provided is a battery pack including the battery module.

The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

### [Mode for Invention]

Hereinafter, the present specification will be described in detail with reference to Examples for specifically describing the present specification. However, the Examples according to the present specification may be modified in various forms, and it is not interpreted that the scope of the present application is limited to the Examples described in detail below. The Examples of the present application are provided to explain the present specification more completely to a person with ordinary skill in the art.

### <Examples and Comparative Examples>

### Example 1

### [Preparation of negative electrode active material and composition for coating negative electrode active material]

### [Preparing of silicon-based particles]

### [Preparation of silicon oxide particles]

SiO, in which Si and SiO₂ were mixed at a molar ratio of 1:1, was placed in Crucible 1 and evaporated by heating to a sublimation temperature of 1400°C. Metallic magnesium was evaporated separately by heating at 800°C. After the crucible were completely evacuated to a pressure of 0.1 torr, the raw materials were evaporated. The vapor mixture containing Mg was reacted for 6 hours and then condensed into a solid state in a vacuum zone at 800°C. The silicon-based active material prepared by the method was pulverized for 3 to 4 hours using a ball-mill apparatus. Thereafter, using a CVD device under an inert gas Ar atmosphere, methane (CH₄) was reacted at 0.1 torr at 1 L/min for about 5 hours to form a carbon layer on the surface of the silicon-based active material, thereby preparing a magnesium silicon oxide active material coated with a carbon layer. The final active material had a D50 controlled to a level of 6 µm.

### [Preparation of silicon carbon composite]

A cellulose powder was placed in a tubular furnace, warmed to 400°C at a rate of 4°C/min, and then heated in a nitrogen atmosphere for 2 hours. Thereafter, the tubular furnace was warmed to 900°C at a rate of 4°C/min, and then heated in a nitrogen atmosphere for 2 hours. After the powder was mixed with sulfuric acid and nitric acid at a volume ratio of 3:1, the resulting mixture was stirred at 60°C for 2 hours, and then centrifuged to obtain a precipitate. The obtained powder was washed five times with a solvent in which ethanol and distilled water were mixed at a volume ratio of 1:3, and then dried at 120°C for 12 hours. The carbon-based particles were put into a KOH solvent and heated at 800°C in a nitrogen atmosphere for 2 hours to secure a porous carbon structure. The porous carbon structure was washed three times with distilled water and then dried at 120°C for 12 hours or more. The porous carbon structure was placed in a horizontal furnace, and SiH₄/He = 5/95 gas was flowed at a flow rate of 50 ml/min at 700°C for 1 hour to prepare a silicon carbon composite. Thereafter, the silicon carbon composite was placed in an electric furnace, and methane was flowed at 700°C and reacted for 2 hours to prepare a silicon carbon composite negative electrode active material having a carbon layer on the surface.

### [Forming of coating layer on silicon-based particles]

A composition for coating a negative electrode active material, including a polymer having a bonding group of -HN-C=O- was prepared by adding polyethylene glycol (PEG) having a molecular weight of 600 g/mol and isophorone diisocyanate (IPDI) in a dimethylformamide (DMF) solvent at a molar ratio of 1.8 of NCO/OH, and adding dibutyltin dilaurate (DBTDL) as a reaction catalyst at a weight ratio of 0.03 with respect to the total weight of the composition for coating a negative electrode active material. Thereafter, the mixture was stirred in a nitrogen environment in an oil bath at 60°C for 3 hours to prepare the composition for coating a negative electrode active material.

The polymer having a bonding group of -HN-C=O-included in the prepared composition for coating a negative electrode active material and the negative electrode active material were mixed at a weight ratio of 1.0:99.0. After the corresponding mixture was stirred for 10 minutes using a disperser at a speed of 2000 rpm per minute, the solvent and the polymer-coated silicon carbon composite were separated through a vacuum filtration device to obtain the polymer-coated silicon carbon composite. The obtained polymer-coated silicon carbon composite was placed in a vacuum oven at 80°C for 12 hours to remove any remaining solvent. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 0.9 wt% based on total 100 wt% of the negative electrode active material.

### [Preparation of negative electrode composition]

The negative electrode active material, carbon black single-walled carbon nanotubes (SWCNTs) as a conductive material, carboxymethyl cellulose (CMC) as a binder, and styrene-butadiene rubber (SBR) were mixed at a weight ratio of 95.3:1:3.7 to prepare a negative electrode slurry.

### [Manufacture of negative electrode]

The negative electrode slurry was applied to a Cu metal thin film having a thickness of a level of 20 µm, and then dried at a circulating air temperature of 60°C. Subsequently, after press-rolling, the rolled thin film was dried in a vacuum oven at 130°C for about a day, and then punched out into a circular shape of 1.4875 cm² to manufacture a negative electrode.

### [Manufacture of secondary battery]

A Li metal thin film punched out into 1.7671 cm² was used as a positive electrode. A porous polyethylene separator was interposed between the positive electrode and the negative electrode, and an electrolyte solution including a mixed solvent of EC (ethylene carbonate) and EMC (methyl ethyl carbonate) at a mixing ratio of 3:7 and 1 M LiPF₆ dissolved therein was injected to manufacture a Li coin half-cell.

### Example 2

A negative electrode active material was prepared in the same manner as in Example 1, except that the composition for coating a negative electrode active material was prepared at a molar ratio of 1.3 of NCO/OH of the polymer reactants.

### Example 3

A negative electrode active material was prepared in the same manner as in Example 1, except that the composition for coating a negative electrode active material was prepared at a molar ratio of 2.5 of NCO/OH of the polymer reactants.

### Example 4

A negative electrode active material was prepared in the same manner as in Example 1, except that the polymer included in the composition for coating a negative electrode active material and the negative electrode active material were mixed at a weight ratio of 0.5:99.5 to prepare a coating layer on the surface of the active material. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 0.45 wt% based on total 100 wt% of the negative electrode active material.

### Example 5

A negative electrode active material was prepared in the same manner as in Example 1, except that the polymer included in the composition for coating a negative electrode active material and the negative electrode active material were mixed at a weight ratio of 3.0:97.0 to prepare a coating layer on the surface of the active material. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 2.8 wt% based on total 100 wt% of the negative electrode active material.

### Example 6

A negative electrode active material was prepared in the same manner as in Example 1, except that the reactant used to prepare the composition for coating a negative electrode active material was prepared by mixing polyethylene glycol (PEG) having a molecular weight of 400 and hexamethylene diisocyanate (HMDI).

### Comparative Example 1

A negative electrode active material was prepared in the same manner as in Example 1, except that a composition for coating a negative electrode active material was prepared by mixing the polymer reactants at a molar ratio of 0.3 of NCO/OH, and a coating layer was prepared on the surface of the active material by mixing the polymer included in the composition for coating a negative electrode active material and the negative electrode active material at a weight ratio of 0.05:99.95. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 0.03 wt% based on total 100 wt% of the negative electrode active material.

### Comparative Example 2

A negative electrode active material was prepared in the same manner as in Example 1, except that a composition for coating a negative electrode active material was prepared by mixing the polymer reactants at a molar ratio of 0.2 of NCO/OH, and a coating layer was prepared on the surface of the active material by mixing the polymer included in the composition for coating a negative electrode active material and the negative electrode active material at a weight ratio of 10.0:90.0. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 6.8 wt% based on total 100 wt% of the negative electrode active material.

### Comparative Example 3

A negative electrode active material was prepared in the same manner as in Example 1, except that a composition for coating a negative electrode active material was prepared by mixing the polymer reactants at a molar ratio of 8.0 of NCO/OH, and a coating layer was prepared on the surface of the active material by mixing the polymer included in the composition for coating a negative electrode active material and the negative electrode active material at a weight ratio of 0.05:99.95. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 0.05 wt% based on total 100 wt% of the negative electrode active material.

### Comparative Example 4

A negative electrode active material was prepared in the same manner as in Example 1, except that a composition for coating a negative electrode active material was prepared by mixing the polymer reactants at a molar ratio of 12.0 of NCO/OH, and a coating layer was prepared on the surface of the active material by mixing the polymer included in the composition for coating a negative electrode active material and the negative electrode active material at a weight ratio of 10.0:90.0. Through the weight of polyethylene glycol (PEG) and isophorone diisocyanate (IPDI) added during polymer synthesis and the reduced weight of the dried polymer-coated silicon carbon composite with respect to the total weight of the silicon carbon composite added, it was confirmed that the amount of the polymer coating layer was 9.9 wt% based on total 100 wt% of the negative electrode active material.

### [Reference Examples]

A battery was manufactured in the same manner as in Example 1, except that a binder composition including a polyurethane polymer having a glass transition temperature of 75°C was used instead of carboxymethylcellulose (CMC) as the binder material in Example 1, and a coating layer was not formed on the silicon-based particles.

The silicon-based negative electrode active materials prepared in the Examples and the Comparative Examples are shown in the following Table 1.

**[Table 1]**

| | Composition of composition for coating | Glass transition temperature of polymer having bonding group of -HN-C=O- | NCO/OH molar ratio of polymer reactant having bonding group of - HN-C=O- | Thickness of coating layer | D50 (µm) |
|---|---|---|---|---|---|
| Example 1 | PEG (MW 600), IPDI | -3.5°C | 1.8 | 15 nm | 6.3 |
| Example 2 | PEG (MW 600), IPDI | -14.7°C | 1.3 | 10 nm | 6.3 |
| Example 3 | PEG (MW 600), IPDI | 15.2°C | 2.5 | 22 nm | 6.4 |
| Example 4 | PEG (MW 600), IPDI | -4.0°C | 1.8 | 9 nm | 6.2 |
| Example 5 | PEG (MW 600), IPDI | -5.3°C | 1.8 | 42 nm | 6.5 |
| Example 6 | PEG (MW 400), HMDI | 1.8°C | 1.8 | 18 nm | 6.4 |
| Comparative Example 1 | PEG (MW 600), IPDI | -35.7°C | 0.3 | 2nm | 6.2 |
| Comparative Example 2 | PEG (MW 600), IPDI | -43.1°C | 0.2 | 350 nm | 6.5 |
| Comparative Example 3 | PEG (MW 600), IPDI | 82.5°C | 8.0 | 3.5 nm | 6.1 |
| Comparative Example 4 | PEG (MW 600), IPDI | 114.7°C | 12.0 | 500nm | 6.9 |
| Reference Example | - | - | - | - | 6.2 |

**<Experimental example: Evaluation of discharge capacity, initial efficiency, and service life (capacity retention rate) characteristics>** The discharge capacity, initial efficiency, and capacity retention rate were evaluated by charging and discharging the manufactured batteries, and are shown in the following Table 2.

For the 1st and 2nd cycles, the battery was charged and discharged at 0.1 C, and from the 3rd cycle to the 299th cycle, the battery was charged and discharged at 0.5 C. The 300th cycle was completed in a charged state (with lithium contained in the negative electrode).
Charging conditions: CC (constant current)/CV (constant voltage) (5 mV/0.005 C current cut-off)
Discharging conditions: CC (constant current) conditions 1.5 V

The discharge capacity (mAh/g) and initial efficiency (%) were derived from the results during first charge/discharge. Specifically, the initial efficiency (%) was derived by the following calculation. Initial efficiency (%) = (first discharge capacity/ first charge capacity) ×100%

The capacity retention rate was each derived by the following calculation. Capacity retention rate (%) = (49th discharge capacity/first discharge capacity) × 100

**[Table 2]**

| Battery | Discharge capacity (mAh/g) | Initial efficiency (%) | Capacity retention rate (%) |
|---|---|---|---|
| Example 1 | 504 | 91.1 | 89.5 |
| Example 2 | 504 | 91.0 | 88.7 |
| Example 3 | 504 | 91.2 | 89.1 |
| Example 4 | 504 | 91.1 | 88.8 |
| Example 5 | 504 | 90.8 | 89.0 |
| Example 6 | 504 | 91.0 | 89.1 |
| Comparative Example 1 | 504 | 89.7 | 68.3 |
| Comparative Example 2 | 462 | 89.4 | 66.5 |
| Comparative Example 3 | 504 | 89.3 | 76.1 |
| Comparative Example 4 | 458 | 88.9 | 73.8 |
| Reference Example | 501 | 89.9 | 81.9 |

In Comparative Examples 1 and 2, a polymer having a bonding group of -HN-C=O- with a glass transition temperature of less than -30°C was used as a composition for coating a negative electrode active material, and a low capacity retention rate was shown because the coating layer was dissolved in the slurry without being coated on the surface of the active material.

In Comparative Examples 3 and 4, a polymer having a bonding group of -HN-C=O- with a glass transition temperature exceeding 80°C was used as a composition for coating a negative electrode active material, and a low capacity retention rate was shown because the shape restoring properties of the coating layer during charging and discharging are reduced by the high rigidity of the coating layer.

In contrast, Examples 1 to 6 showed higher capacity retention rates than Comparative Examples 1 to 4 by using a polymer having a bonding group of -HN-C=O- with a glass transition temperature of -30°C to 80°C as a composition for coating a negative electrode active material.

In addition, in Comparative Examples 1 and 2, a polymer having a bonding group of -HN-C=O- synthesized from a reactant of an alcohol and isocyanate with an NCO/OH molar ratio less than 0.5 was used as a composition for coating a negative electrode active material, and a low capacity retention rate was shown because the coating layer was dissolved in the slurry without being coated on the surface of the active material.

In Comparative Examples 3 and 4, a polymer having a bonding group of -HN-C=O- synthesized from a reactant of an alcohol and isocyanate with an NCO/OH molar ratio exceeding 4 was used as a composition for coating a negative electrode active material, and a low capacity retention rate was shown because a hard coating layer was formed, which reduced the shape restoring properties of the active material against the volume change during charging and discharging.

In contrast, Examples 1 to 6 showed higher capacity retention rates than Comparative Examples 1 to 4 by using a polymer having a bonding group of -HN-C=O- synthesized from a reactant of an alcohol and isocyanate with an NCO/OH molar ratio of 0.5 to 4 as a composition for coating a negative electrode active material.

Furthermore, as a reference example, a battery using a binder composition including a polyurethane polymer having a glass transition temperature of 75°C and a negative electrode active material in which a coating layer was not formed on silicon-based particles showed a lower capacity retention rate than Examples 1 to 6 of the present application.

That is, it could be confirmed that by forming a coating layer on at least a part of the surface of a negative electrode active material using a composition for coating a negative electrode active material including a polymer having a bonding group of -HN-C=O- according to an exemplary embodiment of the present invention, there is an effect of ameliorating severe volume change and particle breakage of the negative electrode active material during charging and discharging, and a battery including the negative electrode active material having the coating layer formed thereon has improved service life characteristics.

## Claims

1. A composition for coating a negative electrode active material, comprising a polymer having a bonding group of -HN-C=O-,
wherein the polymer having a bonding group of -HN-C=O- has a glass transition temperature (Tg) of -30°C to 80°C.

2. The composition of claim 1, wherein the polymer having a bonding group of -HN-C=O- is a polymer of an alcohol and isocyanate, and
the molar ratio of the -NCO group of the isocyanate to the -OH group of the alcohol is 0.5 to 4.

3. A negative electrode active material comprising:
silicon-based particles; and
a coating layer provided on at least a part of the surface of the silicon-based particles and comprising the composition for coating a negative electrode active material according to claim 1 or 2.

4. The negative electrode active material of claim 3, wherein the amount of the coating layer is 0.1 wt% or more and 5 wt% or less based on 100 wt% of the entire negative electrode active material.

5. The negative electrode active material of claim 3, wherein the coating layer has a thickness of 1 nm to 1 µm.

6. The negative electrode active material of claim 3, wherein the silicon-based particles are silicon carbon composite or silicon oxide particles.

7. A negative electrode composition comprising the negative electrode active material according to claim 3, a binder, and a conductive material.

8. The negative electrode composition of claim 7, wherein the conductive material comprises one or more of carbon black and single-walled carbon nanotubes.

9. The negative electrode composition of claim 7, wherein the conductive material is comprised in an amount of 0.01 parts by weight or more and 20 parts by weight or less, based on 100 parts by weight of the negative electrode composition.

10. The negative electrode composition of claim 7, wherein the binder comprises carboxymethyl cellulose.

11. A negative electrode comprising:
a negative electrode current collector; and
a negative electrode active material layer provided on at least one surface of the negative electrode current collector and comprising the negative electrode composition according to claim 7.

12. A lithium secondary battery comprising the negative electrode according to claim 11, a separator, and a positive electrode.

13. A battery module comprising the lithium secondary battery according to claim 12.

14. A battery pack comprising the lithium secondary battery according to claim 12.

15. A battery pack comprising the battery module of claim 13.
